# EUROPEAN PATENT APPLICATION

(11) **EP 3 689 994 A1**
(43) Date of publication of application: **05.08.2020**
(21) Application number: 19155008.6
(22) Date of filing: 01.02.2019
(51) Int. Cl.: C09J 133/08, C08F 220/18

(54) **PRESSURE-SENSITIVE ADHESIVE COMPOSITION AND PRESSURE-SENSITIVE ADHESIVE TAPE**

(71) Applicant: NITTO BELGIUM N.V, 3600 Genk (BE)
(72) Inventor: NAKAYAMA, Junichi, 3600 Genk (BE); VANDENHOLT, Myriam, 3600 Genk (BE)
(74) Representative: Grünecker Patent- und Rechtsanwälte PartG mbB

(57) **Abstract**

The present invention concerns a pressure sensitive adhesive composition, comprising a poly(meth)acrylate resin and at least two tackifying resins, wherein the total amount of tackifying resins in the composition is more than 40 parts by weight, based on 100 parts by weight of the poly(meth)acrylate resin. Further, the present invention a pressure sensitive adhesive tape comprising a substrate, wherein at least one surface of the substrate comprises a coating of the pressure sensitive adhesive composition, optionally in a crosslinked state, wherein the gel content is preferably 20 to 60 %, more preferably 30 to 50 %.

## Description

The present invention relates to a pressure sensitive adhesive composition comprising a poly(meth)acrylate resin and at least two tackifying resins, which shows an excellent adhesive performance on various adherends. Further, the present invention relates to a pressure sensitive adhesive tape comprising a substrate, wherein at least one surface of the substrate comprises a coating of the pressure sensitive adhesive composition.

### Background:

Pressure sensitive adhesive compositions have been used for a variety of applications, such as marking, holding, protecting, sealing and masking purposes.
For instance, pressure sensitive adhesive compositions can be used to produce pressure sensitive adhesive tapes. Usually the tapes comprise a substrate, wherein at least one surface of the substrate comprises a coating of the pressure sensitive adhesive composition. The pressure sensitive adhesive tapes are often used to e.g. temporality or permanently fix various members in electric or electronic parts, such as smartphones, TV's, dishwashers, dryers, refrigerators, washing machines, air conditioners or ovens.

Suitable materials for pressure sensitive adhesive compositions that have been found to function well as pressure sensitive adhesives are polymers designed and formulated to exhibit viscoelastic properties resulting in a desired balance of tack, adhesion, and shear strength. The most commonly used polymers for preparation of pressure sensitive adhesives are natural rubbers, synthetic rubbers (e.g. styrene/butadiene copolymers for preparation (SBR) and styrene/isoprene/styrene (SIS) block copolymers), various (meth)acrylate (e.g. acrylate or methacrylate) copolymers and silicones.
In particular, poly(meth)acrylate resin-based pressure-sensitive adhesive compositions have been widely used, because they are excellent in light resistance, weather resistance, oil resistance and the like, and excellent in pressure-sensitive adhesiveness such as pressure-sensitive adhesive force and cohesive force and in antiaging properties such as heat resistance and weather resistance.

However, poly(meth)acrylate resin-based pressure-sensitive adhesive compositions usually have not been sufficient in adhesive performance to nonpolar adherends, such as polyolefins (e.g. PP), which represent common adherends. Various techniques have been applied, which aim to enhance the adhesive performance particularly to such nonpolar adherends.

For instance, various methods are known, which aim to improve the adhesive performance by adding a tackifier resin to poly(meth)acrylate resin-based pressure-sensitive adhesive compositions. Exemplary pressure sensitive adhesive compositions are disclosed in US2017/0298256A1, US2015/0291854A1, US2015/0044457A1, WO2011/071477A2, WO02/079336A1, WO2017/123488A1, WO2017/123490A1 or WO2010/002557A1.
However, these known approaches still do not show an excellent adhesion performance with regard to adherends of a different surface polarity, particularly including adherends with a low surface polarity. Further, the existing pressure sensitive adhesive compositions at least partially do not show sufficient other mechanical requirements for pressure sensitive adhesive compositions, such as e.g. static shear performance, weight added peel off (WAPO) or repulsion resistance, which are desirable for many applications.

Thus, there is still exists a need for pressure sensitive adhesive compositions, which show an improved adhesive performance on various adherends, in particular to adherends with a low surface polarity, and which have sufficient other mechanical properties, such as e.g. static shear performance, weight added peel off (WAPO) or repulsion resistance.

### Problem of the invention:

In view of the above, the object of the present invention is the provision of a pressure sensitive adhesive composition, which shows an excellent adhesion to various kinds of substrates, in particular to substrates with a low surface polarity, and which has other mechanical properties such as static shear performance, weight added peel off (WAPO) or repulsion resistance, that are at least comparable to commonly known pressure sensitive adhesive compositions. A further object is the provision of a pressure sensitive adhesive tape, which shows an excellent adhesion performance to various adherends, particular to low surface plurality adherends, and which has other mechanical properties, such as static shear performance, weight added peel off (WAPO) or repulsion resistance, that are at least comparable to commonly known pressure sensitive adhesive compositions.

### Brief description of invention:

The problems associated with the prior art are solved by the pressure sensitive adhesive composition in accordance with claim 1. Preferred embodiments of the pressure sensitive adhesive composition are defined in dependent claims 2 to 12. These embodiments are also encompassed in combination. Further, the problems associated with the prior art are solved by the pressure sensitive adhesive tape in accordance with claim 13. Preferred embodiments are defined in claims 14 and 15, which are also encompassed in combination.

### Detailed description of invention:

The pressure sensitive adhesive composition comprises a poly(meth)acrylate resin and at least two tackifying resins. The total amount of tackifying resins in the composition is more than 40 parts by weight, based on 100 parts by weight of the poly(meth)acrylate resin.

The pressure sensitive adhesive composition essentially comprises at least two tackifying resins. By such a composition, an excellent adhesion performance to various adherends, particular to low surface plurality adherends, can be achieved. For instance, it was found that the pressure sensitive adhesive composition in accordance with the present invention has a better and an excellently balanced adhesion performance to various adherends with a different surface polarity (including adherends with a low surface polarity), when compared to pressure sensitive adhesive compositions, which comprise only one tackifying resin.

Suitable adherends in terms of the present invention may be any materials, such as particularly steel, ABS (acrylonitrile butadiene styrene), PP (polypropylene) or silicone. These adherends show surface polarities that significantly differ from each other. The pressure sensitive adhesive composition achieves an excellent adhesion performance to all of these adherends. In particular, the pressure sensitive adhesive composition shows a favorable adhesion performance with regard to very low surface energy adherends, such as polypropylene. Further, the pressure sensitive adhesive composition has other mechanical properties, such as e.g. static shear performance, weight added peel off (WAPO) or repulsion resistance, which are at least comparable to commonly known materials.

It is essential that the total amount of tackifying resins in the composition is more than 40 parts by weight, based on 100 parts by weight of the poly(meth)acrylate resin. This rather high content ensures that the adhesion performance to various adherends becomes excellent. Lower total amounts do not achieve the claimed effects.
The use of such a high amount of tackifying resin can increase the tackiness of the pressure sensitive adhesive, making it adhere to wide range of adherends without the need to apply pressure. However, the addition of such very high amounts of tackifying resin may detrimentally affect the shear and cohesive strength of the pressure sensitive adhesive, and may undesirably raise the Tg of the adhesive. These negative side effects are eliminated or at least minimized due to presence at least two tackifying resins (when compared to compositions only comprising one tackifying resin).

In a preferred embodiment, the total amount of tackifying resin in the composition is from 40 to 140 parts by weight, advantageously 45 to 140 parts by weight, preferably 50 to 120 parts by weight, more preferably 55 to 100 parts by weight, even more preferably 60 to 90 parts by weight, based on 100 parts by weight of the poly(meth)acrylate resin. The adjustment of the total amount of tackifying resin to these ranges ensures a particularly excellent adhesion performance.

Preferably, the pressure sensitive adhesive composition comprises at least three tackifying resins. The pressure sensitive adhesive composition more preferably comprises exactly three tackifying resins. Thereby, the adhesion performance to various adherends can be further increased.

The nature of the tackifying resins in not particularly limited. The tackifying resins belong in embodiments to one or more tackifying resin types (or classes) selected from the group comprising rosin based tackifying resins, terpene phenolic based tackifying resins, hydrocarbon based tackifying resins and petroleum based tackifying resins. However, also other types of tackifying resins are suitable and may be present in the composition. Such suitable examples of other tackifier resins are e.g. terpene resins, xylene resins and elastomers or hydrogenated products thereof, acrylic oligomers or the like. It is not necessary that the at least two tackifying resins belong to a different type of tackifying resins. In other words, the tackifying resins may belong to the same type. However, it may be preferable in embodiments that the at least two types or classes of tackifying resins, which are present in the composition, belong to different types of tackifying resins. This enables an excellent and balanced adhesion performance with regard to various adherends.

In a particularly preferred embodiment, the pressure sensitive adhesive composition comprises three different types of tackifying resins, wherein the tackifying resins include 10 parts by weight or more of a rosin based tackifying resin, 5 parts by weight or more of a terpene phenolic based tackifying resin, and 5 parts by weight or more of a hydrocarbon based tackifying resin, based on 100 parts by weight of the poly(meth)acrylate resin. Such a specific composition is associated with a particularly excellent adhesion performance with regard to various adherends, particularly to steel, ABS and PP adherends.

Furthermore, it is preferred that a pressure sensitive adhesive composition in accordance with such an embodiment comprises 10 to 30 parts by weight, preferably 12.5 to 27.5 parts by weight, more preferably 15 to 25 parts by weight, most preferably 18 to 22 parts by weight of the rosin based tackifying resin, and/or 10 to 50 parts by weight, preferably 15 to 45 parts by weight, more preferably 20 to 40 parts by weight, most preferably 25 to 35 parts by weight of the terpene phenolic based tackifying resin, and/or 10 to 50 parts by weight, preferably 15 to 45 parts by weight, more preferably 20 to 40 parts by weight, most preferably 25 to 35 parts by weight of the hydrocarbon based tackifying resin, based on 100 parts by weight of the poly(meth)acrylate resin. By such a composition, it is possible to even more enhancing the adhesion performance.

The specific chemical nature of the tackifying resins is also not particularly limited. However, the types or classes of the tackifying resins as identified above are preferably selected from the following. In this context is is to be understood that these different types of tackifying resins may be included in any of the combinations envisaged and described above.

The pressure sensitive adhesive composition includes in embodiments a rosin based tackifying resin. Rosin based tackifying resins are commonly known and are commercially available. Exemplary rosin tackifier resins include unmodified rosins (crude rosins) such as gum rosin, wood rosin, and tall oil rosin; modified rosins prepared from these unmodified rosins by modification typically through hydrogenation, disproportionation, or polymerization, such as hydrogenated rosins, disproportionated rosins, polymerized rosins, and other chemically modified rosins; and a variety of rosin derivatives. The rosin derivatives include, for example, rosin esters such as rosin ester compounds obtained from unmodified rosins through esterification with alcohols, and modified rosin ester compounds obtained from modified rosins (e.g., hydrogenated rosins, disproportionated rosins, and polymerized rosins) through esterification with alcohols; unsaturated-fatty-acid-modified rosins obtained from unmodified rosins or modified rosins (e.g., hydrogenated rosins, disproportionated rosins, and polymerized rosins) through modification with unsaturated fatty acids; unsaturated-fatty-acid-modified rosin esters obtained from rosin esters through modification with unsaturated fatty acids; rosin alcohols obtained from unmodified rosins, modified rosins (e.g. hydrogenated rosins, disproportionated rosins, and polymerized rosins), unsaturated-fatty-acid-modified rosins, or unsaturated-fatty-acid-modified rosin esters through reduction of carboxyl groups therein; and metal salts of rosins such as unmodified rosins, modified rosins, and rosin derivatives (of which metal salts of rosin esters are preferred). Preferably, the rosin based tackifying resin is selected from the group comprising hydrogenated rosin tackifying resins and/or rosin ester resins, particularly pentaerythritol rosin ester resins or triethylene glycol rosin ester resins.

In further embodiments, the pressure sensitive adhesive composition includes a terpene phenolic based tackifying resin. Terpene phenolic based tackifying resins are commonly known and are commercially available. Preferably, the terpene phenolic based tackifying resin is selected from the group comprising thermoplastic terpene phenolic based tackifying resins.

In other embodiments, the pressure sensitive adhesive composition includes a hydrocarbon based tackifying resin. Hydrocarbon based tackifying resins are commonly known and are commercially available. Preferably, the hydrocarbon based tackifying resin is selected from the group comprising aliphatic hydrocarbon based tackifying resins and aromatic hydrocarbon based tackifying resins, preferably aromatic hydrocarbon based tackifying resins.

Suitable tackifying resins include the following commercially available resins: Suitable rosin based tackifying resins include FORAL 85E (a glycerol ester of highly hydrogenated refined gum rosin, commercially available from Eastman, Middelburg, NL), FORAL 3085 (a glycerol ester of highly hydrogenated refined wood rosin, commercially available from Hercules Inc., Wilmington, Del.), FORAL 85LB (a glycerol ester of highly hydrogenated refined wood rosin, commercially available from Pinova), STABELITE ESTER 3E, STABELITE ESTER 10E or FORALYN 5020-F (hydrogenated rosin esters, commercially available from Eastman, Middelburg, NL), DERTOLINE P 125 (pentaerythiritol rosin ester, commercially available from DRT), SYLVATAC RE 12 or SYLVATAC RE 105XL (rosin esters, commercially available from Kraton). Suitable terpene phenolic based tackifying resins include DERTOPHENE T (terpene phenolic resin, commercially available from DRT), DUREZ PHENOLIC RESIN 37055 (terpene phenolic resin, commercially available from Sumitomo), SP-553 (terpene phenolic resin, commercially available from Akrochem) or SYLVARES TR A25L (terpene phenolic resin, commercially available from Kraton). Suitable hydrocarbon based tackifying resins include PICCO AR-85 (hydrocarbon resin, commercially available from Eastman), ESCOREZ 2520 and ESCOREZ 5615 (aliphatic/aromatic hydrocarbon resins, commercially available from ExxonMobil Corp., Houston, Tex.), and REGALITE R1010, REGALITE S7125 or REGALITE 7100 (hydrogenated hydrocarbon resins, commercially available from Eastman, Kingsport, Tenn.)

In embodiments, it is preferred that the two tackifying resins are selected in a way that one of the tackifying resins comprises a high Tg (glass transition temperature) of at least 20 °C, whereas the other one comprises a low Tg with of no greater than 0 °C. The high Tg tackifying resin is typically a solid at room temperature. Examples of suitable high Tg tackifying resins include, for example, terpenes, aliphatic- or aromatic-modified C5 to C9 hydrocarbons, and rosin esters. In some aspects, lower molecular weight hydrocarbons may be preferred, as the compatibility with the acrylate base polymer decreases as the molecular weight of the hydrocarbon increases. In some aspects, the weight average molecular weight (Mw) of the high Tg tackifying resin is between 500 and 3000 g/mol. In some aspects, the Mw of the high Tg tackifying resin is not greater than 1500, in some embodiments not greater than 1000, or even not greater than 800 g/mol.

The low Tg tackifying resin may have a glass transition temperature of 0 °C or less, in some aspects, -10 °C or less, or even -20 °C or less. Such materials are generally liquids at room temperature. There is no particular lower limit on the glass transition temperature of the low Tg tackifying resin, except that it must be greater than the Tg the poly(meth)acrylate resin. In some aspects, the Tg of the low Tg tackifying resin is at least 10 °C greater, at least 20 °C greater, or even at least 30 °C greater than the Tg of the tackifying resin. Generally, lower molecular weight compounds may be more desirable, as the compatibility with the tackifying resins decreases as the molecular weight increases. Exemplary low Tg tackifying resins include terpene phenolic resins, terpenes, aliphatic- or aromatic-modified C5 to C9 hydrocarbons, and rosin esters. In some aspects, the weight average molecular weight (Mw) of the low Tg tackifying resin may be between 300 and 1500 g/mol. In some aspects, the Mw of the low Tg tackifying resin is not greater than 1000, in some aspects, not greater than 800, or even not greater than 500 g/mol.

Another important parameter for the tackifying resins is their softening point. In a preferred embodiment, the pressure sensitive adhesive composition comprises two tackifying resins in the composition, which show a difference in their softening points of 30°C or more, preferably of 50°C or more. Even more preferably, one of the two tackifying resins has a softening point of 25°C or lower and the other one has a softening point of 80°C or higher. Such a specific adjustment of the softening points of the tackifying resins ensures a particularly high adhesion performance to various adherends with a different surface polarity.

In a particularly preferred embodiment, the tackifying resins include a hydrocarbon based tackifying resin having a softening point of 30 °C or more. The presence of such a specific tackifying resin ensures a particularly excellent adhesion performance in combination with a good shear strength. It is further especially preferred that the softening point of the hydrocarbon based tackifying resin is 50 °C or more, more preferably 75°C or more. The presence of such a specific hydrocarbon based tackifying resin leads to an excellent adhesion in combination with a particularly preferred static shear performance. Suitable hydrocarbon based tackifying resins include PICCO AR-85 (softening point: 87 °C) and REGALITE S7125 (softening point: 123 °C). The presence of such specific tackifying resins leads to pressure sensitive adhesive compositions that inter alia show a better static shear performance, when e.g. compared to REGALITE R1010 (liquid at room temperature of 23 °C) or any other hydrocarbon based tackifying resin, which has a softening point below the ranges as indicated above.

The nature of the poly(meth)acrylate resin of the pressure sensitive adhesive composition is not particularly limited as far as the poly(meth)acrylate resin comprises acrylate based and/or methacrylate based monomer units. The term "alkyl(meth)acrylate" means an alkyl acrylate and/or an alkyl methacrylate. Suitable resins and methods for their production are commonly known. Suitable embodiments are as follows:

In preferred embodiments, the poly(meth)acrylate resin is prepared from a polymerizable mixture comprising at least one linear or branched alkyl(meth)acrylate monomer. The linear or branched alkyl group of the alkyl(meth)acrylate monomer preferably comprises from 1 to 24, more preferably from 4 to 20, even more preferably 6 to 15, still more preferably from 6 to 10 carbon atoms.

Examples of suitable alkyl(meth)acrylates monomers include (but are not limited to) methyl (meth)acrylate, ethyl(meth)acrylate, propyl(meth)acrylate, isopropyl(meth)acrylate, butyl(meth)acrylate, isobutyl(meth)acrylate, s-butyl(meth)acrylate, t-butyl(meth)acrylate, pentyl(meth)acrylate, isopentyl(meth)acrylate, hexyl(meth)acrylate, heptyl(meth)acrylate, octyl(meth)acrylate, 2-ethylhexyl(meth)acrylate, isooctyl(meth)acrylate, nonyl(meth)acrylate, isononyl(meth)acrylate, decyl(meth)acrylate, isodecyl(meth)acrylate, undecyl(meth)acrylate, dodecyl(meth)acrylate, tridecyl(meth)acrylate, tetradecyl(meth)acrylate, pentadecyl (meth)acrylate, hexadecyl(meth)acrylate, heptadecyl(meth)acrylate, octadecyl (meth)acrylate, nonadecyl(meth)acrylate, eicosyl(meth)acrylate, or norbonyl (meth)acrylate, and any combinations or mixtures thereof.

Suitable examples of alkyl(meth)acrylates other than these alkyl(meth)acrylates include (meth)acrylic acid esters having an alicyclic hydrocarbon group, such as cyclopenty (meth)acrylate, cyclohexyl(meth)acrylate and isobornyl(meth)acrylate, (meth)acrylic acid esters having an aromatic hydrocarbon group, such as phenyl(meth)acrylate, (meth)acrylic acid esters obtained from terpene compound derivative alcohols, and the like.

Particularly preferred alkyl(meth)acrylates include butyl(meth)acrylates, isobutyl (meth)acrylates, s-butyl(meth)acrylates, t-butyl(meth)acrylates, pentyl(meth)acrylates, isopentyl (meth)acrylates, hexyl(meth)acrylates, heptyl(meth)acrylates, octyl(meth)acrylates, 2-ethylhexyl (meth)acrylates, isooctyl(meth)acrylates, nonyl(meth)acrylates, and isononyl(meth)acrylates.

Even more preferred alkyl(meth)acrylate monomers are butyl acrylate (BA), and 2-ethylhexyl acrylate (2EHA), which can achieve a particularly advantageous adhesiveness at low temperatures and adhesiveness to rough surfaces.

Typically, the poly(meth)acrylate resin is prepared from a monomer mixture comprising from 50 to 100 parts, preferably from 70 to 100 parts, more preferably from 80 to 100 parts, or even more preferably from 90 to 100 parts by weight of at least one linear or branched alkyl(meth)acrylate monomer.

Optionally, one or more monoethylenically unsaturated co-monomers may be present in the monomer mixture used to prepare the poly(meth)acrylate resin, wherein the monoethylenically unsaturated co-monomers may be co-polymerized with the alkyl(meth)acrylate monomers. These co-monomers may be added for the purpose of modifying cohesive force, heat resistance, crosslinking properties and the like. Accordingly, the poly(meth)acrylate resin may contain the co-polymerizable monomers together with the above alkyl (meth)acrylate as a main component. As the co-polymerizable monomer, a monomer having a polar group may be suitably used.

Specific examples of such co-polymerizable monomers include (but are not limited to) carboxyl group-containing monomers such as acrylic acid, methacrylic acid, carboxyethyl acrylate, carboxypentyl acrylate, itaconic acid, maleic acid, fumaric acid, crotonic acid and isocrotonic acid; hydroxyl group-containing monomers such as hydroxyalkyl(meth)acrylates such as hydroxyethyl(meth)acrylate, hydroxypropyl(meth)acrylate, hydroxybutyl(meth)acrylate, hydroxyhexyl(meth)acrylate, hydroxyoctyl(meth)acrylate, hydroxydecyl(meth)acrylate, hydroxylauryl(meth)acrylate, (4-hydroxymethylcyclohexyl)(meth)acrylate or 2-hydroxyethyl(meth)acrylate (2HEA); acid anhydride group-containing monomers such as maleic anhydride and itaconic anhydride; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate and (meth)acryloyloxynaphthalenesulfonic acid; phosphoric acid group-containing monomers such as 2-hydroxyethylacryloyl phosphate; (N-substituted) amide-based monomers such as (meth)acrylamide, N,N-dimethyl(meth)acrylamide, N,N-diethyl(meth)acrylamide, N-isopropyl(meth)acrylamide, N-butyl(meth)acrylamide, N-methylol(meth)acrylamide, N-methylolpropane(meth)acrylamide, N-methoxymethyl (meth)acrylamide and N-butoxymethyl(meth)acrylamide; succinimide-based monomers such as N-(meth)acryloyloxymethylenesuccinimide, N-(meth)acryloyl-6-oxyhexamethylenesuccinimide and N-(meth)acryloyl-8-oxyhexamethylenesuccinimide; maleimide-based monomers such as N-cyclohexylmaleimide, N-isopropylmaleimide, N-laurylmaleimide and N-phenylmaleimide; itaconimide-based monomers such as N-methylitaconimide, N-ethylitaconimide, N-butylitaconimide, N-octylitaconimide, N-2-ethylhexylitaconimide, N-cyclohexylitaconimide and N-laurylitaconimide; vinyl esters such as vinyl acetate and vinyl propionate; nitrogen-containing heterocyclic monomers such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine and N-vinylmorpholine; N-vinylcarboxylic acid amides; lactam-based monomers such as N-vinylcaprolactam; cyanoacrylate monomers such as acrylonitrile and methacrylonitrile; aminoalkyl (meth)acrylate-based monomers such as aminoethyl (meth)acrylate, N,N-dimethylaminoethyl (meth)acrylate and t-butylaminoethyl (meth)acrylate; alkoxyalkyl (meth)acrylate-based monomers such as methoxyethyl (meth)acrylate and ethoxyethyl (meth)acrylate; styrenic monomers such as styrene and α-methylstyrene; epoxy group-containing acrylic monomers such as glycidyl (meth)acrylate; glycol-based acrylic ester monomers such as polyethylene glycol (meth)acrylate, polypropylene glycol (meth)acrylate, methoxyethylene glycol (meth)acrylate and methoxypolypropylene glycol (meth)acrylate; heterocycle, halogen atom or silicon atom-containing acrylic acid ester-based monomers such as tetrahydrofurfuryl (meth)acrylate, fluorine (meth)acrylate and silicon (meth)acrylate; olefinic monomers such as isoprene, butadiene and isobutylene; vinyl ether-based monomers such as methyl vinyl ether and ethyl vinyl ether; thioglycolic acid; vinyl esters such as vinyl acetate and vinyl propionate; aromatic vinyl compounds such as styrene and vinyltoluene; olefins or dienes such as ethylene, butadiene, isoprene and isobutylene; vinyl ethers such as vinyl alkyl ethers; vinyl chloride; alkoxyalkyl (meth)acrylate-based monomers such as methoxyethyl (meth)acrylate and ethoxyethyl (meth)acrylate; sulfonic acid group-containing monomers such as sodium vinylsulfonate; imido group-containing monomers such as cyclohexylmaleimide and isopropylmaleimide; isocyanate group-containing monomers such as 2-isocyanatoethyl (meth)acrylate; fluorine atom-containing (meth)acrylates; silicon atom-containing (meth)acrylates; and the like. Further, one or two or more of these copolymerizable monomers may be present.

As a particularly preferable co-polymerizable monomer, a carboxyl group-containing monomer is used. In particular, acrylic acid (AA) is preferably used. A further particularly preferable co-polymerizable monomer is 2-hydroxyethyl(meth)acrylate (2HEA).

One class of useful monoethylenically unsaturated co-monomers may be particularly present, which includes co-monomers having a homopolymer glass transition temperature greater than the glass transition temperature of the acrylate homopolymer. Sometimes these monomers are referred to as "reinforcing co-monomers". Typically, these co-monomers have a homopolymer glass transition temperature greater than 20 °C. Examples of suitable co-monomers falling within this class include acrylic acid, itaconic acid, methacrylic acid, acrylonitrile, methacrylonitrile, vinyl acetate, isobornyl acrylate, cyano ethyl acrylate, maleic anhydride, hydroxyalkylacrylates, beta-carboxyethyl acrylate, vinyl esters of neodecanoic, neononanoic, neopentanoic, 2-ethylhexanoic, or propionic acids, vinylidene chloride, styrene, vinyl toluene, alkyl vinyl ethers, and any combinations or mixtures thereof.

The amount of the monoethylenically unsaturated co-monomers is not particularly limited. When present, the monoethylenically unsaturated co-monomer may be used in amounts ranging from 0.5 to 50 wt%, preferably 0.5 to 25 wt%, or more preferably from 1.0 to 15 wt%, even more preferably 2.0 to 10.0 wt%, of the (meth)acrylate base polymer. Such amounts ensure a particularly favorable cohesive force and shear strength of the acrylic pressure-sensitive adhesive composition.

In further embodiments, one or more multifunctional ethylenically unsaturated monomers may be included in the pre-polymerization monomer mixture used to prepare the poly(meth)acrylate resin. Examples of such multifunctional ethylenically unsaturated monomers include (but are not limited to) multifunctional (meth)acrylate monomers. Multifunctional (meth)acrylates particularly include tri(meth)acrylates and di(meth)acrylates (i.e. compounds comprising three or two (meth)acrylate groups). Typically di(meth)acrylate monomers (i.e. compounds comprising two (meth)acrylate groups) are used. Useful tri(meth)acrylates include, for example, trimethylolpropane tri(meth)acrylate, propoxylated trimethylolpropane triacrylates, ethoxylated trimethylolpropane triacrylates, tris(2-hydroxyethyl)isocyanurate triacrylate, and pentaerythritol triacrylate. Useful di(meth)acrylates include, for example, ethylene glycol di(meth)acrylate, diethylene glycol di(meth)acrylate, triethylene glycol di(meth)acrylate, tetraethylene glycol di(meth)acrylate, 1,4-butanediol di(meth)acrylate, 1,6-hexanediol di(meth)acrylate, alkoxylated 1,6-hexanediol diacrylate, tripropylene glycol diacrylate, dipropylene glycol diacrylate, cyclohexane dimethanol di(meth)acrylate, alkoxylated cyclohexane dimethanol diacrylates, ethoxylated bisphenol A di(meth)acrylates, neopentyl glycol diacrylate, polyethylene glycol di(meth)acrylates, polypropylene glycol di(meth)acrylates, and urethane di(meth)acrylates. Particular preferred examples of polyfunctional monomers include neopentyl glycol (meth)acrylate, pentaerythritol di(meth)acrylate, pentaerythritol tri(meth)acrylate or dipentaerythritol hexa(meth)acrylate, allyl (meth)acrylate, vinyl(meth)acrylate, divinylbenzene, epoxy acrylate, polyester acrylate, and urethane acrylate. The polyfunctional monomers can be used either alone or as a combination of two or more thereof.

Typically the multifunctional ethylenically unsaturated monomers are present in amounts ranging from 0.0001 to 0.2 wt%, preferably from 0.001 to 0.1 wt%, more preferably 0.01 to 0.5 wt%, of the base polymer.

In a particularly preferred embodiment, the poly(meth)acrylate resin comprises monomeric units derived from 30 to 95 wt% esters of (meth)acrylic acid, such as butyl(meth)acrylate (BA), 2-ethylhexyl(meth)acrylate (2EHA) or 2-hydroxyethyl(meth)acrylate (2HEA), 2 to 10 wt% (meth)acrylic acid (AA) and 0 to 10 wt% vinylacetate (Vac).

In an even more preferred embodiment, the poly(meth)acrylate resin comprises 35 to 45 wt% butyl(meth)acrylate (BA), 35 to 45 wt% 2-ethylhexyl(meth)acrylate (2EHA), 1 to 5 wt% 2-hydroxyethyl(meth)acrylate (2HEA) and 2 to 7 wt% (meth)acrylic acid (AA).

The poly(meth)acrylate resin can prepared by polymerizing the monomer component(s) according to a commonly known polymerization process. Exemplary polymerization processes include solution polymerization, emulsion polymerization, bulk polymerization, and polymerization through the application of active energy rays (active energy ray polymerization). Among them, solution polymerization and active energy ray polymerization are preferred, of which solution polymerization is more preferred, in view of transparency, water resistance, and costs.

The solution polymerization may be performed using a commonly known solvent. Exemplary solvents are e.g. organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. Each of these solvents may be used alone or in combination.

The poly(meth)acrylate resin is usually prepared by a process involving the addition of an appropriate initiator to the pre-polymerization monomer mixture. For instance, the initiator may be a photoinitiator, which is activated by ultraviolet light. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, photoactive oximes and azo-type initiators. The photoinitiator may be used in an amount from 0.001 to 5.0 parts by weight, preferably from 0.01 to 5.0 parts by weight, more preferably in an amount from 0.05 to 0.5 parts by weight, and more preferably in an amount from 0.05 to 0.3 parts by weight, per 100 parts by weight of total monomer content.

Alternatively, the pre-polymerization monomer mixture may be polymerized by a suitable thermal initiator. Thermal initiators include, but are not limited to azo, peroxide, persulfate, and redox polymerization initiators. Exemplary initiators include azo polymerization initiators such as 2,2'-azobisisobutyronitrile (AIBN), 2,2'-azobis (4-methoxy-2,4-dimethylvaleronitrile), 2,2'-azobis (2,4-dimethylvaleronitrile), 2,2'-azobis (2-methylbutyronitrile), 1,1'-azobis (cyclohexane-1-carbonitrile), 2,2' -azobis (2,4,4-trimethylpentane), and dimethyl 2,2' -azobis (2-methylpropionate); peroxide polymerization initiators such as benzoyl peroxide (BPO), t-butyl hydroperoxide, di-t-butyl peroxide, t-butyl peroxybenzoate, dicumyl peroxide, 1,1-bis (t-butylperoxy)-3,3,5-trimethylcyclohexane, and 1,1-bis (t-butylperoxy) cyclododecane. Particularly preferred examples are AIBN, dibenzoylperoxide, or N-dodecylmercaptan. Each polymerization initiator may be used alone or in combination. The amount of polymerization initiators is not critical. In embodiments, the initiator may be used in an amount from 0.01 to 5.0 parts by weight, preferably from 0.025 to 2 weight percent, per 100 parts by weight of total monomer content.

The polymerization reaction to prepare the poly(meth)acrylate resin may be conducted in the presence of one or more crosslinkers. The presence of a crosslinker may lead to a pressure sensitive adhesive composition with enhanced the mechanical properties. The nature of the crosslinker is not limited and may be selected e.g. from photocrosslinkers or radiation crosslinkers or the like. Suitable crosslinkers are commercially available. In a preferred embodiment, the pressure sensitive adhesive composition is a radiation crosslinkable pressure sensitive adhesive composition, which is polymerized in the presence of a radiation crosslinker.

Suitable examples of crosslinkers include, but are not limited to, isocyanate crosslinking agents, epoxy crosslinking agents, melamine crosslinking agents, peroxide crosslinking agents, as well as urea crosslinking agents, metal alkoxide crosslinking agents, metal chelate crosslinking agents, metal salt crosslinking agents, carbodiimide crosslinking agents, oxazoline crosslinking agents, aziridine crosslinking agents, and amine crosslinking agents. The crosslinker ensures higher anchoring properties and minimizes cohesive failure of the pressure-sensitive adhesive composition. Each of these crosslinkers may be used alone or in combination.

Among them, isocyanate crosslinking agents are preferred since they allow the pressure-sensitive adhesive composition to exhibit a high cohesive strength and to exhibit both adhesive properties and removability in further satisfactory balance in the adhesive faces.

Exemplary isocyanate crosslinking agents (multifunctional isocyanate compounds) include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate. Exemplary isocyanate crosslinking agents further include a trimethylolpropane/tolylene diisocyanate adduct (supplied by Nippon Polyurethane Industry Co., Ltd. under the trade name "CORONATE L"), and a trimethylolpropane/hexamethylene diisocyanate adduct (supplied by Nippon Polyurethane Industry Co., Ltd. under the trade name "CORONATE HL"). A further particularly preferred crosslinker is DESMODUR L75 as available from Bayer. The pressure-sensitive adhesive composition, when containing an isocyanate crosslinking agent, preferably contains an poly(meth)acrylate resin obtained through copolymerization of monomer components including a hydroxyl-containing monomer as a copolymerizable monomer.

When a crosslinker is present, the concentration may be 0.01 to 3 parts by weight, preferably 0.1 to 2 parts by weight, more preferably 0.05 to 1 parts by weight of crosslinker, based on 100 parts by weight of the poly(meth)acrylate resin. The range is preferred for crosslinking the poly(meth)acrylate resin to allow the pressure-sensitive adhesive composition to have a high cohesive strength and to exhibit adhesive properties and removability in satisfactory balance. Higher amounts of crosslinker may deteriorate the adhesion performance of the pressure sensitive adhesive composition.

In embodiments, the poly(meth)acrylate resin has a glass transition temperature (Tg) of - 80 °C or more, preferably -70 °C or more, and more preferably -60 °C or more. When the glass transition temperature (Tg) is lower, the cohesive force of the pressure sensitive adhesive composition at a temperature equal to or higher than room temperature decreases, resulting in deterioration of the holding performance or the high-temperature adhesive performance in some cases.

Furthermore, the pressure sensitive adhesive composition may have in embodiments a weight-average molecular weight (Mw) of 1,000 to 10,000,000, preferably 10,000 to 5,000,000, and more preferably 100,000 to 1,000,000. When the weight-average molecular weight is higher, the effect of improving pressure-sensitive adhesive performance of the pressure-sensitive adhesive tape is not sufficiently obtained in some cases. When the weight-average molecular weight is lower, the pressure-sensitive adhesive performance or the holding performance may be deteriorated because the molecular weight becomes too low.

The pressure sensitive adhesive composition may further include a variety of other additives depending on the envisaged properties for the resulting pressure sensitive adhesive. Exemplary additional additives include (but are not limited to) plasticizers, UV stabilizers, antistatic agents, colorants, antioxidants, fungicides, bactericides, organic and/or inorganic filler particles, pigments, and any combination thereof.

The pressure-sensitive adhesive composition may be prepared, for example, by mixing or blending the poly(meth)acrylate resin, the tackifier resins, and optional other additives with another. The mixing or blending may be achieved by commonly known methods.

The present invention also concerns a pressure sensitive adhesive tape comprising a substrate, wherein at least one surface of the substrate comprises a coating of the pressure sensitive adhesive composition in accordance with the present invention. The advantages of such a pressure sensitive adhesive tape are discussed above in connection with the pressure sensitive adhesive composition and equally apply to the pressure sensitive adhesive tape.

Preferably, the pressure sensitive adhesive tape is a double-sided sensitive adhesive tape. In a particularly preferred embodiment, the pressure sensitive adhesive tape comprises the coating of the pressure sensitive adhesive composition on both surfaces of the substrate.

The nature of the substrate is not particularly limited. Substrate materials are commonly known and are commercially available. Exemplary substrates are polyester films, polyamide films, PVC films or polyolefin films, preferably polyester films, such as PET films. The thickness of the substrate is not particularly limited. Suitable substrate thicknesses range are e.g. 1 to 100 µm, preferably 2 to 50 µm, more preferably 5 to 20 µm.

The pressure-sensitive adhesive composition may be applied on the substrate surface by using conventionally known methods such as roll coating, gravure coating, reverse roll coating, roll brush coating, air knife coating, spray coating, or extrusion coating with a die coater or the like.

The pressure sensitive adhesive tape may contain other commonly known layers, such as e.g. foam layers, reinforcing layers or release liners. These layers are commonly known.
In particular, the one or more adhesive faces of the pressure-sensitive adhesive tape may be protected by a release liner (separator) before use. In case of a double-sided pressure-sensitive adhesive tape, the two adhesive faces of the double-sided pressure-sensitive adhesive tape may be protected by two release liners respectively; or the double-sided pressure-sensitive adhesive tape may be wound into a roll so that the two adhesive faces are protected by one release liner having release surfaces on both sides. The release liner is used as a protective material for the pressure-sensitive adhesive composition and is removed on or before the application of the pressure-sensitive adhesive tape to the adherend. The thickness of release liner, if used, is not included in the "thickness of the pressure-sensitive adhesive tape."

Release liners for use herein may be, but not limited to, common release papers, and specific examples thereof include bases having a releasably treated layer; bases containing a fluorocarbon polymer and having low adhesiveness; and bases containing a non-polar polymer and having low adhesiveness. Exemplary bases having a releasably treated layer include plastic films and papers whose surface having been treated with a release agent. Exemplary release agents include silicone release agents, long-chain alkyl release agents, fluorine-containing release agents, and molybdenum sulfide release agents. Exemplary fluorocarbon polymers for constituting the bases containing a fluorocarbon polymer and having low adhesiveness include polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers. Exemplary non-polar polymers for constituting the bases containing a non-polar polymer and having low adhesiveness include olefinic resins such as polyethylenes and polypropylenes. The release liners can be formed according to a known or common procedure. The thicknesses and other parameters or properties of the release liners are not critical.

The coating of the pressure sensitive adhesive composition on the at least one surface of the pressure sensitive adhesive tape has in embodiments a thickness of 20 to 100 µm, preferably 40 to 80 µm.

The pressure-sensitive adhesive tape may have a total thickness of 500 µm or less (e.g. 80 to 500 µm), preferably 400 µm or less (e.g. 100 to 400 µm), more preferably 300 µm or less (e.g. 120 to 300 µm), and furthermore preferably 200 µm or less (e.g. 150 to 200 µm), for reduction in thickness, size, and weight, and for resource savings. As used herein the term "total thickness" of the pressure-sensitive adhesive tape refers to sum of the thickness the substrate and the layer(s) of the pressure-sensitive adhesive layer composition, i.e. does not include any other layers.

In embodiments, the pressure sensitive adhesive composition on the at least one surface of the pressure sensitive adhesive tape is in a crosslinked state. Preferably, the gel content is 10 to 80 %, more preferably 20 to 60 %. This ensures sufficient mechanical properties of the pressure sensitive adhesive composition, while allowing excellent adhesion properties.
The gel content may be determined as a content of insoluble matter, which is insoluble in ethyl acetate. Specifically, the gel content may be determined as a weight fraction by immersing a sample of the pressure-sensitive adhesive composition in ethyl acetate at 23°C for 7 days, weighing the insoluble matter, and calculating the weight fraction (in units of percent by weight) with respect to the sample weight before immersion.

More specifically, the gel content is a value as determined according to the following method:
0.1 g of a pressure-sensitive adhesive composition is sampled, the sample is covered by a porous tetrafluoroethylene sheet (supplied by Nitto Denko Corporation under the trade name "NTF 1122") having an average pore size of 0.2 µm, tied with a kite string, the weight of the resulting article is measured, and this weight is defined as a "weight before immersion." The "weight before immersion" is the total weight of the pressure-sensitive adhesive composition, the tetrafluoroethylene sheet, and the kite string. Independently, the total weight of the tetrafluoroethylene sheet and the kite string is measured as a tare weight. Next, the sampled pressure-sensitive adhesive composition covered by the tetrafluoroethylene sheet and tied with the kite string (the whole article is hereinafter also referred to as a "sample") is placed in a 50-ml vessel filled with ethyl acetate, and left stand at 23°C for 7 days. The sample after immersion in ethyl acetate is retrieved from the vessel, transferred into an aluminum cup, dried in a drier at 130°C for 2 hours to remove ethyl acetate, and the weight of the resulting sample is measured as a weight after immersion. Then the gel fraction is calculated according to the following equation: Gel content (percent by weight) = (A-B)/(C-B)x100, wherein "A" represents the weight after immersion; "B" represents the tare weight; and "C" represents the weight before immersion.
The gel content may be controlled by the composition of monomer components constituting the poly(meth)acrylate)resin, the weight-average molecular weight, and the content of the crosslinker in the pressure-sensitive adhesive composition.

The pressure sensitive adhesive tapes can be used for e.g. temporality or permanently fixing various members in electric or electronic parts, such as smartphones, TV's, dishwashers, dryers, refrigerators, washing machines, air conditioners or ovens.

### Examples:

The advantageous effects of the present invention will be demonstrated by the following examples and comparative examples.

### Materials as employed in (comparative) examples:

Polymer A: A poly(meth)acrylate resin, which was prepared by the following process: In a separable flask, 47 parts by weight of n-butylacrylate (BA), 47 parts by weight of 2-ethylhexylacrylate (2EHA), 0.5 parts by weight of 2-hydroxyethyl acrylate (2HEA), 5.5 parts by weight of acrylic acid (AA), 0.2 parts by weight of AIBN and 0.02 parts by weight of n-dodecylmercaptan were added into 159 parts by weight of ethyl acetate and the mixture was stirred for one hour while introducing nitrogen gas. After removing oxygen in the polymerization system in this way, the mixture was heated at 65°C for 10 hours to conduct a solution polymerization, wherin an acrylic resin solution having a solids content of 39% by weight was obtained. The weight-average molecular weight of the obtained acrylate polymer was 850,000 g/mol.

Polymer B: A poly(meth)acrylate resin, which was prepared by the following process: An acrylic resin solution having a solids content of 45% by weight was obtained in the same manner as in the preparation of Polymer A, except for using 46 parts by weight of n-butylacrylate (BA), 45 parts by weight of 2-ethylhexylacrylate (2EHA), 3 parts by weight of 2-hydroxyethyl acrylate (2HEA), 6 parts by weight of acrylic acid (AA), 0.2 parts by weight of AIBN as a polymerization initiator and 0.04 parts by weight of n-dodecylmercaptan, which were added into 133 parts by weight of a mixed solvent of toluene and ethyl acetate in weight ratio of 78 and 22. The weight-average molecular weight of the obtained acrylate polymer was 350,000 g/mol.

Polymer C: A poly(meth)acrylate resin, which was prepared by the following process: An acrylic resin solution having a solids content of 30% by weight was obtained in the same manner as in the preparation of Polymer A, except for using 95 parts by weight of n-butylacrylate (BA), 5 parts by weight of acrylic acid (AA) and 0.38 parts by weight of BPO as a polymerization initiator, which were added into 133 parts by weight of toluene. The weight-average molecular weight of the obtained acrylate polymer was 550,000 g/mol.

Rosin based tackifying resin R1: DERTOPOLINE P125 (pentaerythiritol rosin ester, commercially available from DRT).

Rosin based tackifying resin R2: SYLVATAC RE 12 (rosin ester, commercially available from Kraton).

Rosin based tackifying resin R3: STABELITE ESTER 3E (hydrogenated rosin ester, commercially available from Eastman, Middelburg, NL; softening point: liquid at 23 °C).

Terpene phenolic based resin T1: DERTOPHENE T (terpene phenolic resin, commercially available from DRT); softening point: 95 °C.

Hydrogenated resin H1: PICCO AR-85 (hydrocarbon resin, commercially available from Eastman; softening point: 87 °C).

Hydrogenated resin H2: REGALITE R1010 (hydrogenated hydrocarbon resin, commercially available from Eastman, Kingsport, Tenn.; softening point: liquid at 23 °C).

Hydrogenated resin H3: REGALITE S7125 (hydrogenated hydrocarbon resins, commercially available from Eastman, Kingsport, Tenn.; softening point: 123 °C).

Crosslinker: DESMODUR L-75 as available form Bayer.

### Preparation of pressure sensitive adhesive compositions:

Pressure sensitive adhesive compositions according to the (comparative) examples were prepared by a conventional process by mixing the respective poly(meth)acrylate resins, tackifying resins and crosslinkers in the ratios as indicated in the below Tables.

### Preparation of pressure sensitive adhesive tapes:

Double-sided pressure sensitive adhesive tapes were prepared with a conventional coating process by equally coating both sides of a commercially available PET film substrate with the respective pressure sensitive compositions. The respective pressure sensitive compositions were coated on a release liner using a 15cm wide applicator and a targeting thickness adhesive layer of 59 µm after drying. The drying was conducted at 120 °C for 3 minutes in a drying oven. The dried adhesives were laminated onto the PET film substrate (thickness 12 µm).

### Physical properties and measurement conditions:

The softening point is measured according to ASTM E28.

The glass transition temperature Tg is measured by a DSC method according to ISO22768:2006 by using a differential scanning calorimeter DSC Q2000 manufactured by TA instruments. For the analysis, the tape samples were first cooled and then heated (heating ramp +10 °C/min) in a nitrogen atmosphere.

The weight average molecular weight is determined by using a gel permeation chromatography (GPC) instrument (Waters Model Pump 515 and Waters 2414 refractive index detector) with styragel columns relative to polystyrene standards using a tetrahydrofuran solvent.

The film thickness is measured according to EN 1942.

The adhesion ([N/20mm] on various adherends (commercially available steel (BA steel), ABS, PP and silicone adherends) is measured in accordance EN 1939.

The shear strength is measured as the static shear at 60 °C for 1 hour and for 3 hours, respectively, in accordance with EN 1943.

The WAPO (weight added peel off) (100g, PP or ABS, 60°C; [mm/2h]) is measured in accordance with the following method: One of the two release liners on a double-sided pressure sensitive adhesive tape was removed and applied onto a PET film (thickness 23 µm). The tape was cut into a sample with a size of 20mm width x 70mm length. The other release liner was removed and the tape was applied to a PP or a ABS substrate plate with a roller having a weight of 2kg in an environment of 60 °C for 30 min. Thereafter, a 100g load was applied on the tape in an environment of 60 °C. After a duration of 2 hours, the peeling distance of the tape from the substrate plate was measured, which corresponds to the respective WAPO value.

The repulsion resistance (PC/PC 24h and 96h, [mm]) is measured in accordance with the following method: A double-sided pressure sensitive adhesive tape was cut into a sample with a size of 25mm x 120mm. The sample was then applied onto a polycarbonate plate with a thickness of 2.0mm and a size of 20mm x 120mm to prepare a test piece. Subsequently, the test piece was high pressure bonded to another polycarbonate plate with a thickness of 1.0mm and size of 30mm x 200mm at ordinary temperature (23□) by employing a force with a roller having a weight of 2kg. After a storage of 24 hours, the plate was bent on a chord of 190mm in length as shown in the Figure below, and, in this state, left at 23 °C. After 24 hours and 96 hours, the floating height of the tape from the object to be adhered was measured.

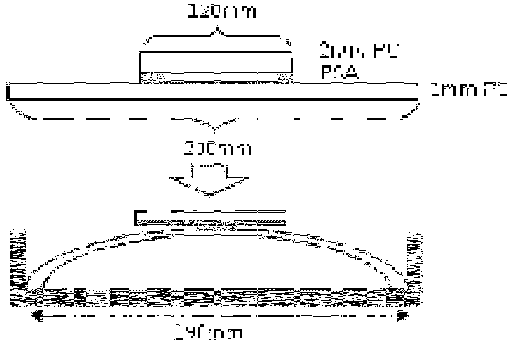

### Results:

**Table 1**

| **Example** | | **Com Ex 1** | **Comp Ex 2** | **Ex 1** | **Ex 2** | **Ex 3** | **Ex 4** | **Ex 5** |
|---|---|---|---|---|---|---|---|---|
| **Polymer** | parts | 100 | 100 | 100 | 100 | 100 | 100 | 100 |
| | type | A | A | A | A | B | B | B |
| **Rosin based Tackifier** | parts | 30 | 50 | 20 | 30+20 | 20 | 20 | |
| | type | R1 | R1 | R1 | R1+R2 | R3 | R3 | |
| **Terpene phenolic based tackifier** | parts | | | 30 | | | 30 | 30 |
| | type | | | T1 | | | T1 | T1 |
| **Hydrocarbon based tackifier** | parts | | | | | 30 | | 30 |
| | type | | | | | H1 | | H1 |
| **Crosslinker** | parts | 1.00 | 1.00 | 1.00 | 1.00 | 1.00 | 1.00 | 1.00 |
| **Tape thickness [µm]** | | 135 | 134 | 128 | 142 | 126 | 135 | 137 |
| **Gel content** | [%] | 44 | 33 | 45 | 15 | N.A. | N.A. | N.A. |
| **Adhesion [N/20mm]** | Steel | 14.9 | 18.3 | 20.0 | 17.1 | 12.5 | 13.3 | 12.0 |
| | ABS | 16.1 | 20.3 | 21.4 | 17.3 | 12.4 | 13.3 | 12.5 |
| | PP | 7.5 | 4.5 | 9.4 | 10.6 | 11.2 | 12.8 | 8.7 |

**Table 2**

| **Example** | | **Ex 6** | **Ex 7** | **Ex 8** | **Ex 9** | **Ex 10** | **Ex 11** | **Ex 12** |
|---|---|---|---|---|---|---|---|---|
| **Polymer** | parts | 100 | 100 | 100 | 100 | 100 | 100 | 100 |
| | type | B | B | B | B | B | B | C |
| **Rosin based Tackifier** | parts | 20 | 20 | 20 | 20 | 5 | 35 | 20 |
| | type | R3 | R3 | R3 | R3 | R3 | R3 | R3 |
| **Terpene phenolic based tackifier** | parts | 5 | 50 | 30 | 30 | 30 | 30 | 30 |
| | type | T1 | T1 | T1 | T1 | T1 | T1 | T1 |
| **Hydrocarbon based tackifier** | parts | 30 | 20 | 5 | 50 | 30 | 35 | 30 |
| | type | H1 | H1 | H1 | H1 | H1 | H1 | H1 |
| **Crosslinker** | parts | 1.00 | 1.00 | 1.00 | 1.00 | 1.00 | 1.00 | 1.00 |
| **Tape thickness [µm]** | | 126 | 127 | 134 | 124 | 134 | 132 | 125 |
| **Gel content** | [%] | N.A | N.A | N.A. | N.A | N.A. | N.A. | N.A. |
| **Adhesion [N/20mm]** | Steel | 13.4 | 17.5 | 12.6 | 17.6 | 12.2 | 16.7 | 15.1 |
| | ABS | 13.9 | 17.5 | 13.1 | 17.6 | 13.9 | 16.0 | 16.5 |
| | PP | 13.2 | 15.7 | 13.0 | 14.0 | 10.0 | 17.1 | 14.7 |

**Table 3**

| **Example** | | **Ex 13** | **Ex 14** | **Ex 15** | **Ex 16** | **Ex 17** | **Ex 18** | **EX 19** |
|---|---|---|---|---|---|---|---|---|
| **Polymer** | parts | 100 | 100 | 100 | 100 | 100 | 100 | 100 |
| | type | B | B | A | B | B | B | C |
| **Rosin based Tackifier** | parts | 20 | 20 | 20 | 20 | 20 | 20 | 20 |
| | type | R3 | R3 | R3 | R3 | R3 | R3 | R3 |
| **Terpene phenolic based tackifier** | parts | 30 | 30 | 30 | 30 | 30 | 30 | 30 |
| | type | T1 | T1 | T1 | T1 | T1 | T1 | T1 |
| **Hydrocarbon based tackifier** | parts | 30 | 30 | 30 | 20 | 20 | 20 | 30 |
| | type | H1 | H1 | H1 | H1 | H2 | H3 | H1 |
| **Crosslinker** | parts | 2.00 | 3.00 | 1.00 | 1.00 | 1.00 | 1.00 | 1.00 |
| **Tape thickness [µm]** | | 126 | 115 | 135 | 122 | 123 | 125 | 125 |
| **Gel content** | [%] | 43 | 49 | 18 | 39 | N.A. | N.A. | N.A. |
| **Adhesion [N/20mm]** | Steel | 18.5 | 16.4 | 21.7 | 23.8 | 15.1 | 18.4 | 15.1 |
| | ABS | 18.0 | 17.2 | 21.5 | 22.0 | 15.7 | 19.2 | 16.5 |
| | PP | 9.2 | 8.3 | 15.6 | 16.1 | 12.2 | 17.0 | 14.7 |
| **Static shear [mm] 60°C × 1h** | | | | | 0.5 | 1.0 | 0.5 | 0.5 |
| **Static shear [mm] 60°C × 3h** | | | | | 1.0 | drop | 1.0 | 1.0 |

**Table 4**

| **Example** | | **Com Ex 1** | **Comp Ex 2** | **Ex 20** |
|---|---|---|---|---|
| **Polymer** | parts | 100 | 100 | 100 |
| | type | A | A | A |
| **Rosin based Tackifier** | parts | 30 | 50 | 30 |
| | type | R1 | R1 | R1 |
| **Terpene phenolic based tackifier** | parts | | | 20 |
| | type | | | T1 |
| **Hydrocarbon based tackifier** | parts | | | |
| | type | | | |
| **Crosslinker** | parts | 1.00 | 1.00 | 1.00 |
| **Tape thickness [µm]** | | 135 | 134 | 138 |
| **Adhesion [N/20mm]** | Silicone | 23.6 | 23.7 | 28.9 |
| **WAPO [mm/2h]** | PP, 60 °C | 24 | 9 | 34 |
| | ABS, 60 °C | 13 | 3 | 8 |
| **Repulsion [mm]** | PC/PC 24h | 1.5 | 1.5 | 0.8 |
| | PC/PC 96h | 1.5 | 1.5 | 1.5 |

The results disclosed in Tables 1 to 3 clearly identify that pressure sensitive compositions according to Examples 1 to 19 (comprising at least two tackifying resins in the composition) show an improved adhesion performance, when compared to Comparative Examples 1 and 2 (comprising only one tackifying resin in the composition). In particular, the adhesion to adherends with a very low polarity, namely a PP surface, is improved by the inventive compositions. Especially, a comparison of Examples 1 to 5 (comprising two tackifying resins in the composition in 50 parts by weight) with Comparative Example 2 (comprising only one tackifying resin in the composition, also in 50 parts by weight) demonstrates that a balanced adhesion to various adherends, including a very low polarity PP adherend, can be achieved by incorporating a second tackifying resin, without increasing the overall content of tackifying resin.

Examples 6 to 19 (comprising three tackifying resins in the composition) show particularly improved values with regard to the adhesion to BA steel, ABS and PP adherends. The adhesion results are even more improved, when compared to Examples 1 to 5 (comprising two tackifying resins in the composition).

Examples 1 to 19 demonstrate that the advantageous effect of an improved adhesion performance can be achieved by a pressure sensitive adhesive composition, comprising a poly(meth)acrylate resin and at least two tackifying resins, wherein the total amount of tackifying resins in the composition is more than 40 parts by weight, based on 100 parts by weight of the poly(meth)acrylate resin. In particular, Example 2 shows that this effect is not dependent on the nature of the tackifying resin. However, a comparison of Example 2 with Examples 1, 3 and 4 shows that a particularly advantageous balance of excellent adhesion to various kinds of substrates can be obtained, when two different classes of tackifying resins are combined. Example 16 shows that the advantageous effects can be achieved not only with Polymers A or B, but also with Polymer C, which is a poly(meth)acrylate resin that only comprises butylacrylate (BA) acrylic acid (AA) monomeric units. This clearly illustrates that the nature of the poly(meth)acrylate resin is not decisive.

Moreover, Comparative Example 1 (comprising one tackifying resin in the composition, in 30 parts by weight) and Comparative Example 2 (comprising one tackifying resin in the composition, in 50 parts by weight) demonstrate that it is not sufficient to only increase the amount of tackifying resin (i.e. the only tackifying resin present in the composition), since this negatively affects the balance of the adhesion performance (and particularly lowers the adhesion performance to low polarity adherends, such as PP).

Examples 16, 18 and 19 also show that the presence of a hydrocarbon based tackifying resin with a softening point of 30 °C or more (i.e. hydrocarbon based tackifying resins H1 and H3, having a softening points of 87 °C and 123 °C, respectively) results in an improves static shear, when compared to a pressure sensitive composition comprising a hydrocarbon based tackifying resin with a softening point of less than 30 °C (Example 17; hydrocarbon based tackifying resin H2; softening point: liquid at 23 °C).

The results disclosed in Table 4 illustrate that an inventive pressure sensitive adhesive composition (Example 20) shows an improved adhesion performance to silicone adherends, when compared to Comparative Examples 1 and 2. Further, a good WAPO (weight added peel off) and a good repulsion resistance are is achieved, which are at least comparable to the values obtained for the comparative examples.

## Claims

1. Pressure sensitive adhesive composition, comprising a poly(meth)acrylate resin and at least two tackifying resins, wherein the total amount of tackifying resins in the composition is more than 40 parts by weight, based on 100 parts by weight of the poly(meth)acrylate resin.

2. The pressure sensitive adhesive composition according to claim 1, wherein the total amount of tackifying resin in the composition is 45 to 140 parts by weight, preferably 50 to 120 parts by weight, more preferably 55 to 100 parts by weight, even more preferably 60 to 90 parts by weight, based on 100 parts by weight of the poly(meth)acrylate resin.

3. The pressure sensitive adhesive composition according to claim 1 or 2, comprising at least three tackifying resins, preferably three tackifying resins, and/or wherein the tackifying resins belong to one or more tackifying resin types selected from the group comprising rosin based tackifying resins, terpene phenolic based tackifying resins, hydrocarbon based tackifying resins and petroleum based tackifying resins.

4. The pressure sensitive adhesive composition according to any of claims 1 to 3, wherein the tackifying resins include 10 parts by weight or more of a rosin based tackifying resin, 5 parts by weight or more of a terpene phenolic based tackifying resin, and 5 parts by weight or more of a hydrocarbon based tackifying resin, based on 100 parts by weight of the poly(meth)acrylate resin.

5. The pressure sensitive adhesive composition according to claim 4, wherein the pressure sensitive adhesive composition comprises 10 to 30 parts by weight, preferably 12.5 to 27.5 parts by weight, more preferably 15 to 25 parts by weight, most preferably 18 to 22 parts by weight of the rosin based tackifying resin, and/or 10 to 50 parts by weight, preferably 15 to 45 parts by weight, more preferably 20 to 40 parts by weight, most preferably 25 to 35 parts by weight of the terpene phenolic based tackifying resin, and/or 10 to 50 parts by weight, preferably 15 to 45 parts by weight, more preferably 20 to 40 parts by weight, most preferably 25 to 35 parts by weight of the hydrocarbon based tackifying resin, based on 100 parts by weight of the poly(meth)acrylate resin.

6. The pressure sensitive adhesive composition according to any of claim 1 to 5, wherein the tackifying resins include a rosin based tackifying resin selected from the group comprising hydrogenated rosin tackifying resins and/or rosin ester resins, particularly pentaerythritol rosin ester resins or triethylene glycol rosin ester resins.

7. The pressure sensitive adhesive composition according to any of claims claim 1 to 6, wherein the tackifying resins include a terpene phenolic based tackifying resin selected from the group comprising thermoplastic terpene phenolic based tackifying resins.

8. The pressure sensitive adhesive composition according to any of claims 1 to 7, wherein the tackifying resins include a hydrocarbon based tackifying resin selected from the group comprising aliphatic hydrocarbon based tackifying resins and aromatic hydrocarbon based tackifying resins, preferably aromatic hydrocarbon based tackifying resins, and/or wherein the tackifying resins include a hydrocarbon based tackifying resin having a softening point of 30 °C or more, wherein the softening point is measured according to ASTM E28.

9. The pressure sensitive adhesive composition according to any of claims 1 to 6, wherein two of the tackifying resins in the composition show a difference in their softening points of 30°C or more, preferably of 50°C or more, preferably wherein one of the two tackifying resins has a softening point of 25°C or lower and wherein the other one has a softening point of 80°C or higher, and/or wherein the softening point of the hydrocarbon based tackifying resin is 50 °C or more, preferably 75°C or more, wherein the softening point is measured according to ASTM E28.

10. The pressure sensitive adhesive composition according to any of claims 1 to 8, wherein the poly(meth)acrylate resin comprises monomeric units derived from 30 to 95 wt% esters of (meth)acrylic acid, such as butyl(meth)acrylate (BA), 2-ethylhexyl(meth)acrylate (2EHA) or 2-hydroxyethyl(meth)acrylate (2HEA), 2 to 10 wt% (meth)acrylic acid (AA) and 0 to 10 wt% vinylacetate (Vac).

11. The pressure sensitive adhesive composition according to any of claims 1 to 9, wherein the poly(meth)acrylate resin comprises 35 to 45 wt% butyl(meth)acrylate (BA), 35 to 45 wt% 2-ethylhexyl(meth)acrylate (2EHA), 1 to 5 wt% 2-hydroxyethyl(meth)acrylate (2HEA) and 2 to 7 wt% (meth)acrylic acid (AA).

12. The pressure sensitive adhesive composition according to any of claims 1 to 10, wherein the pressure sensitive adhesive composition is a crosslinkable pressure sensitive adhesive composition, optionally comprising 0.01 to 3, preferably 0.1 to 2, more preferably 0.05 to 1 parts by weight of crosslinker, based on 100 parts by weight of the poly(meth)acrylate resin.

13. Pressure sensitive adhesive tape comprising a substrate, wherein at least one surface of the substrate comprises a coating of the pressure sensitive adhesive composition according to any of claims 1 to 11, optionally in a crosslinked state, wherein the gel content is preferably 10 to 80 %, more preferably 20 to 60 %.

14. The pressure sensitive adhesive tape according to claim 12 or 13, which is a double-sided sensitive adhesive tape, preferably comprising the coating of the pressure sensitive adhesive composition on both surfaces of the substrate.

15. The pressure sensitive adhesive tape according to any of claims 12 to 14, wherein the substrate is a polyester film having a thickness of 1 to 30 µm, preferably 5 to 20 µm, and/or wherein the coating of the pressure sensitive adhesive composition has a thickness of 20 to 100 µm, preferably 40 to 80 µm, wherein the thickness is measured according to EN 1942.
